# EUROPEAN PATENT APPLICATION

(11) **EP 1 355 366 A2**
(43) Date of publication of application: **22.10.2003**
(21) Application number: 02254678.2
(22) Date of filing: 03.07.2002
(51) Int. Cl.: H01M 2/16

(54) **Separator in lead acid battery and manufacturing method therof**

(30) Priority: 09.04.2002 CN 02105956
(71) Applicant: CSB Battery Co., Ltd., Beitou Area, Taipei City (TW)
(72) Inventor: Chen, Richard, San Diego, California 92154-7632 (US); Phanthapirat, Thaweechai, San Diego, California 92154-7632 (US); Ho, Chien-Hsien, San Diego, California 92154-7632 (US); Martinez, Alejandro, San Diego, California 92154-7632 (US)
(74) Representative: Abnett, Richard Charles

(57) **Abstract**

The invention provides a separator in lead acid battery, composed of fiber material and polymers; the polymers provide functions of increasing the mechanical strength for separators, avoiding shortage between positive and negative electrodes, and decreasing the thickness of separators. The invention also provides a manufacturing method of battery separators, whereby polymers are used to coat or absorb to porous separators through means of spraying, immersing, brushing, adhering or other similar means, thus acquiring thinner battery separators with increased mechanical strength.

## Description

### FIELD OF THE INVENTION

The invention relates to a separator for lead acid battery and the manufacturing method thereof; with the porous separator being coated or attached or impregnated with polymers, the mechanical strength of the separator is to be increased, the thickness thereof decreased and shortage avoided.

### BACKGROUND OF THE INVENTION

During daily life, the use of batteries has become extremely prevalent, with the kinds of batteries being categorized, according to characteristics of charging and discharging electricity and nature of functions, as primary cells and secondary battery, wherein the secondary batteries refer to batteries that can be repeatedly used by the process of charging which, enabling the activated material in batteries to recover to the original state, makes the continuing provision of electricity by using the same batteries possible. The secondary batteries include lead-acid batteries, Ni-Cd batteries, Ni-MH batteries, secondary Li batteries, Li-ion batteries and Li-polymer batteries.

The history of using lead-acid batteries goes back a long way, with the negative electrode being lead, the positive electrode being lead dioxide, the electrolyte being 27% to 39% sulfuric acid solution. In as much as the secondary batteries provide functions of greater amount of electricity, wider range of operational temperatures, simpler structures, more matured technologies and lower costs, along with longer cycle life, the quantities of production and total production values of secondary batteries represent a substantially crucial portion in battery production. Secondary batteries are mainly used in products like automobiles, motorcycles and uninterrupted power supply system.

The valve regulated lead-acid batteries (VRLA) are also a kind of the secondary batteries; a typical VRLA battery includes positive electrode, negative electrode, separator, electrolyte and outer container. For each VRLA, the chemical reaction between the positive/negative electrode (lead dioxide/lead) and electrolyte (sulfuric acid) is to be utilized. During the discharging process, when a battery connects to an electric circuit, electrons are to move from the negative electrode to the positive electrode, thus producing electric current. During the charging process, a battery is connected to a power supply device, so that the electric current from outside source is to produce the reverse reaction in the lead-acid battery to achieve the goal of charging batteries.

The positive electrode and the negative electrode are composed of the grids and the active material, wherein the grids are for the active material to attach onto, as well as the function of current collector. The grids can be of lead-calcium alloy or other lead alloy. When reactions occur, the two electrodes are to react with the electrolyte (sulfuric acid), thus creating the transfer and exchange of the electrons and ions. The electrolyte is to be the medium for ion exchange.

The separator is for separating the positive and negative electrodes in the battery, so as to avoid any shortage caused by contacts between the two electrodes, and at the same time allows the conductive ions (e.g., H⁺ or HSO₄⁻) to pass through. Therefore, the separator is an insulator in terms of electrons, but for the electrolyte, enough porosity is needed to generate reactions and ion conduction. General functional requirements for separators are mainly: low resistance when adsorbing acid, high chemical stability and lower price. Currently material used for separators include synthetic resin, rubber separators and the newest glass fiber separators. Moreover, separators have to possess fine acid-resistance capability, as well as fine mechanical strength, vibration resistance, impact resistance and high and low temperature resistance, so as to maintain the integrity of the structure of the battery.

The porous separator used frequently in VRLA batteries is of absorbed glass mat (AGM); such material can be filled with huge quantity of acid liquid and at the same time can be an insulator. The porous separator in lead-acid batteries is designed to fulfill three purposes: absorbing electrolyte, becoming the medium for electrolyte transportation, and being the insulator between the positive and negative electrodes. The separator needs to absorb enough quantity of electrolyte, so as to participate chemical reaction between the positive electrode and the negative electrode and thus produce electric current. Therefore, most batteries are designed to maintain certain thickness of the separators, so as to prevent the positive and negative electrodes from creating shortage. As a result, the volumes of the positive and negative plates are to be decreased in the fixed space of a battery. However, the disadvantage is that the capacity of battery is lowered. A better separator is such a fine insulator that only electrolyte can be allowed to pass through and shortage between the positive and negative electrodes is avoided.

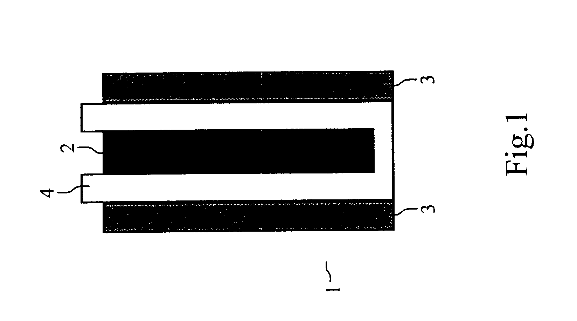

As shown in Fig. 1, which shows the structural view of the conventional lead-acid battery 1, comprising positive electrode 2, negative electrode 3, separator 4 and electrolyte (not shown in figures). The main purposes for the separator 4 are absorbing electrolyte, being the medium of the transportation of electrolyte, and being the insulator between the positive electrode 2 and the negative electrode 3. The separator 4 needs to absorb enough quantity of electrolyte, so as to participate chemical reaction between the positive electrode 2 and the negative electrode 3 and thus produce electric current.

In the application of the VRLA batteries, the sizes of the batteries are to be produced according to clients' needs and the areas of the electrode plates and the thickness of the electrodes is to decide the output of the battery capacity or the electrical current. Therefore, to increase the thickness of the electrodes, the areas of the electrode plates and the number of electrode plates is to increase the output of the electrical current of batteries, thus it is to be desired in design that the thickness of the AGM separator being decreased. However, the conventional AGM separator contains certain drawbacks, for example, to decrease the thickness of the separator is to lower the mechanical strength, thus causing problems during manufacturing process; furthermore, thinner AGM separators also tend to cause shortage, with possible reasons being that, during the manufacturing process some small lead drops or dusts are to be formed on the surface of the electrode plates, thus if the AGM separators are too thin, the lead drops or dusts shall potentially cause the shortage between the positive and negative electrodes.

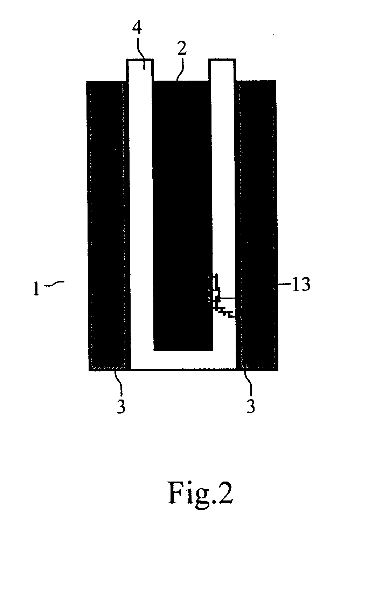

As shown in Fig. 2, it shows another reason for causing shortage in lead-acid battery 1. With the increase of usage time regarding batteries, the lead crystal dendrite 13 of the lead crystal formed on the negative electrode 3 is also to grow; therefore, it is possible for the lead crystal dendrite 13 of the lead crystal to penetrate through general glass fiber separator 4, thus coming into contact with the positive electrode 2 to cause shortage. Hence, the separator 4 used in general lead-acid battery 1 is usually designed to be thicker, so as to prevent the foregoing situation from occurring, a consideration that at the same time sacrifices the space of the positive electrode 2 and thus cause the battery capacity to be lower.

Approximately half of the thickness regarding batteries is occupied by the porous separator, thus for increasing the capacity of the unit volume, the thickness decrease of the separator has already been attempted so as to increase the thickness of the electrode plate or the number of the electrode plates.

In conclusion, the characteristic of the VRLA battery separator needs to be improved upon, so as to overcome the drawbacks of the prior art; to make it thinner, more mechanical strength and avoiding shortage caused between the positive and negative electrodes have thus become the technologies desperately needed to be developed.

### SUMMARY OF THE INVENTION

In view of the flaws and drawbacks of the existing battery separators, the object of the invention is to provide a porous separator used in lead-acid batteries, comprising fiber material and polymers. The foregoing polymers possess the effects of increasing the mechanical strength of separators, avoiding shortage between the positive and negative electrodes and decreasing the thickness of separators.

The foregoing fiber material is formed by glass fiber, chemically synthetic fiber, or the combination of glass fiber and chemically synthetic fiber. The chemically synthetic fiber can be of polyester or other chemically synthetic fiber with acid-resistance capability.

The foregoing polymers possess characteristics as follows: acid-resistance capability, able to form porous layer that allows acid transfer or being the medium of the acid transfer, and enough bonding strength so as to bind fibers, thus increasing the mechanical strength of the porous separator.

For maintaining the degree of porosity and the liquid-absorbing ability, the foregoing polymers can be added with water-absorbing additives like silicon dioxide or other compounds with similar characteristics, so as to increase the acid-absorbing ability of the polymers.

The foregoing acid is sulfuric acid or other acids having the similar chemical characteristics. The foregoing acid is the electrolyte used in lead-acid batteries.

The other object of the invention is to provide a manufacturing method for a kind of novel battery separators, which is to combine the porous separator with polymers, so as to produce battery separators with better characteristics. The polymers are used to coat, impregnate or attach to the porous separators by spraying, immersing, brushing, adhering or other similar means; wherein the means of spraying causes the polymers to coat onto the surface of the porous separators; the means of immersing causes the polymers to be impregnated into the porous separators through immersing the porous separators into polymer solutions having certain concentration; furthermore, to adhere the polymer membrane onto the surface of the porous separators is to achieve the similar effect.

The foregoing polymer solution is a mixture of polymers, hardener and solvent.

The foregoing polymers can be phenol polymer, epoxy resin polymer or other polymers having similar characteristics. The foregoing solvent can be isopropyl alcohol, acetone or other similar solvents.

During the combination of the fiber material of porous separators and polymers, the junction points among fibers are to be more closely bound via the condensation among polymers, thus the mechanical strength of separators is to be tremendously increased (about 25% to 50%); the mechanical strength varies according to the types and quantities of polymers applied.

Moreover, the battery separator produced via means provided by the invention not only increases the mechanical strength, but also decreases the possibility of the shortage. In as much as the porous separator is coated or impregnated with polymers, the pores inside porous separator are to be smaller through condensation of the molecules of the polymers, thus decreasing the possibility of shortage caused by the lead crystal dendrite of the lead crystal penetrating from the negative electrode to the positive electrode.

Another merit of the invention is that, with the increase of the mechanical strength by covering polymers onto the surface of the separator, the thickness of the separator is to be decreased, therefore the thickness of the positive and negative electrode plates can be increased, thus increasing the output capacity per unit.

### BRIEF DESCRIPTION OF THE DRAWINGS

These and other features, aspects and advantages of the present invention will become better understood with regard to the following description, appended claims and accompanying drawings that are provided only for further elaboration without limiting or restricting the present invention, where:
Fig.1 shows a structural diagram of the conventional lead-acid battery;
Fig. 2 shows a diagram of the lead crystal dendrite of the lead crystal formed in the lead-acid battery;
Fig. 3 shows a structural diagram of the lead-acid battery of the invention;
Fig. 4 shows a flowchart of the manufacturing method for battery separators of the invention;
Fig. 5 shows a diagram of the manufacturing method for battery separators of the invention by using means of spraying;
Fig. 6 shows a sectional structural diagram of the battery separator manufactured by means of the invention shown in Fig. 5;
Fig. 7 shows a diagram of the manufacturing method for battery separators of the invention by using means of immersion;
Fig. 8 shows a sectional structural diagram of the battery separator manufactured by means of the invention shown in Fig. 7;
Fig. 9 shows a structural diagram of the fiber material inside porous separator;
Fig. 10 shows a structural diagram of the fiber material inside porous separator combining with polymers of the invention;
Fig. 11 shows a diagram of the result regarding the test of the strength of the separator; and
Fig. 12 shows a diagram of the result regarding the test of the performance of the battery.

### DETAILED DESCRIPTION OF THE PREFERRED EMBODIMENT

The invention relates to a separator for lead-acid batteries and the manufacturing method thereof, and the merits and the characteristics are to be further understood with the elaboration as follows in accordance with figures.

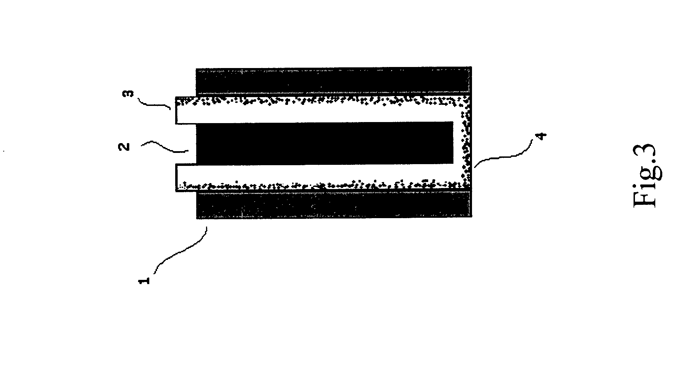

At first please refer to Fig. 3, which shows a structural diagram of the lead-acid battery 1 of the invention, which comprises at least one positive electrode 2, one negative electrode 3, one separator 4' and the electrolyte (not shown in figures). The separator 4' is made by combining the fiber material and polymers; with the polymers being absorbed into the pores of porous separator to gather at the junction of fiber material, the mechanical strength of the battery separator 4' is to be strengthened.

The foregoing electrolyte can be sulfuric acid or any other acids with similar chemical characteristics.

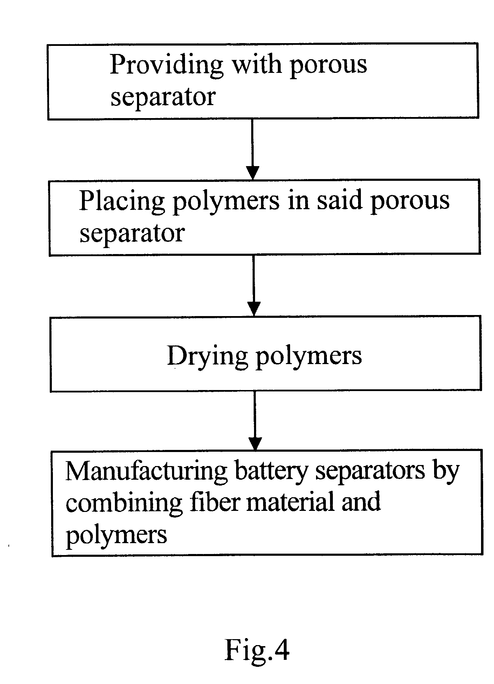

Fig. 4 shows a flowchart of the manufacturing method for the battery separator 4' of the invention, which comprises steps as follows: first provides a porous separator, and then place polymers into the porous separator; dry the polymers, and finally the battery separator 4' combining the fiber material and polymers is produced.

The fiber material is of glass fiber, chemically synthetic fiber or glass fiber combining with chemically synthetic fiber, and the foregoing chemically synthetic fiber can be polyester or any other chemically synthetic fiber having acid-resistance capability.

The polymers have characteristics as follows: acid-resistance capability; able to form porous layer that allows acid transfer or being medium of the acid transfer; having enough bonding strength to bind fiber material, thus increasing the mechanical strength of the porous separator.

The polymers, for maintaining the degree of porosity and ability to absorb the liquids, can be added with water-absorbing additives, for example, silicon dioxide or any other compounds with similar characteristics, so as to increase the acid-absorbing ability of the polymers.

The acid is sulfuric acid or other acids having the similar chemical characteristics. The foregoing acid is the electrolyte used in lead-acid batteries.

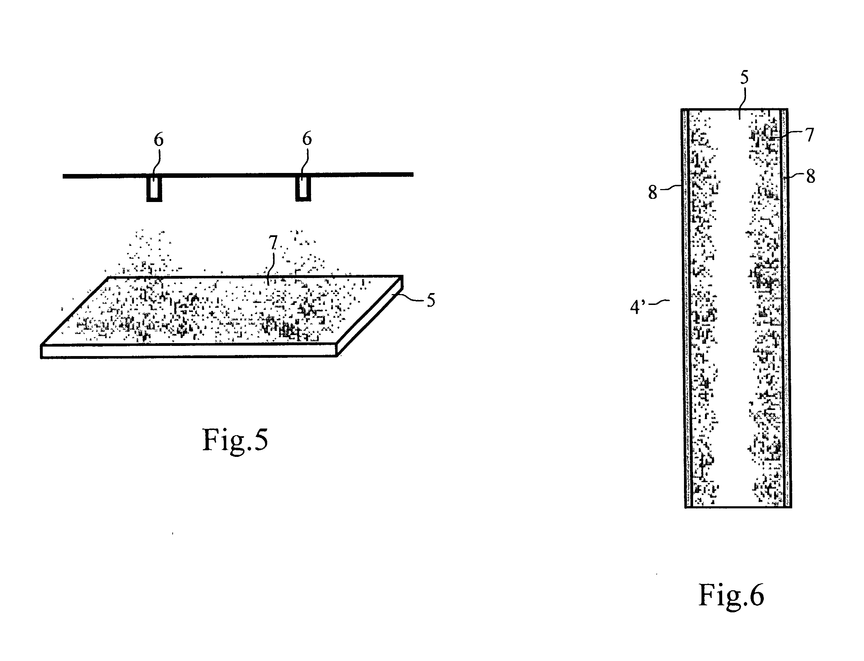

The method of placing polymers onto the porous separator 5 can be achieved through means as follows: as shown in Fig. 5, the polymer 7 solution is to be sprayed from the spray outlet 6 for coating the polymer 7 onto the porous separator 5; and then, the porous separator 5 coated with the polymer 7 is to be placed in the oven to be dried for certain period of time, thus vaporizing the solvent in the polymer 7 solution, and then the polymer 7 is to condense onto the surface of porous separator 5, thus the battery separator 4' is eventually made. As shown in Fig. 6, the polymer layer 8 is formed respectively on the surface of the two sides of the separator 4' made through means of spraying, thus preventing the lead crystal dendrite of the lead crystal formed at the negative electrode from penetrating through the separator and then coming into contact with the positive electrode and cause shortage.

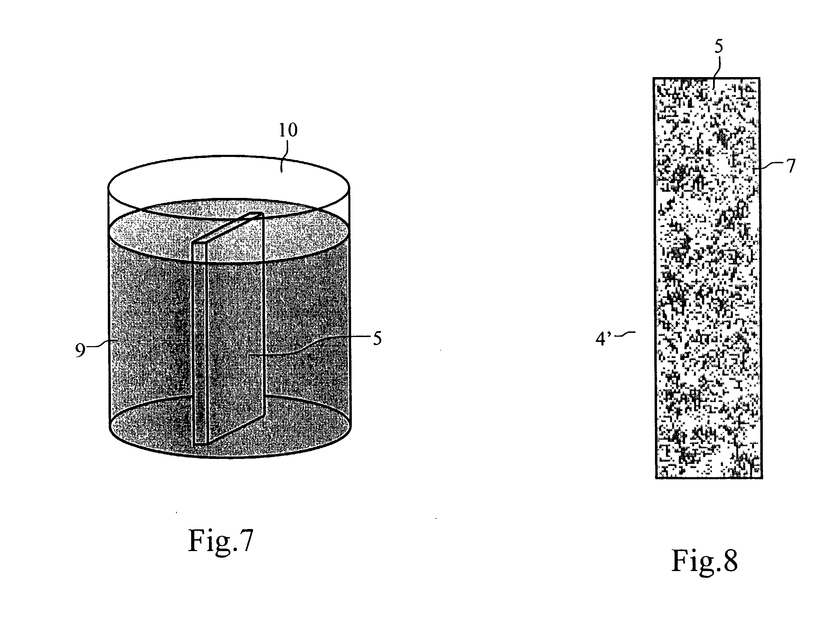

Another method of the invention for manufacturing the separator combining polymers with the fiber material is shown in Fig. 7. The first step is to immerse the porous separator 5 into the container 10 containing polymer solution 9 for certain period of time, thus enabling the molecules in the solution 9 to impregnate into the porous separator 5; and then, to take out the porous separator 5 with polymer solution and to dry, the then the battery separator 4' is eventually made. The separator 4' made by immersion is shown in Fig. 8, manifesting that through immersion the solution of the polymer 7 is to be distributed more in the porous separator 5.

The polymer solution 9 contains polymers, hardener and solvent.

The polymers can be phenol polymer, epoxy resin polymer or other polymers having similar characteristics. The foregoing solvent can be isopropyl alcohol, acetone or other similar solvents.

Another method of the invention for manufacturing the separator combining polymers with the porous separator mainly involves the adherence of the polymer membrane onto the surface of the porous separator; such polymer membrane is porous so that it can be the medium for acid transfer. The polymer membrane is to be adhered or attached onto the surface of the separator near the negative plate, so as to prevent the lead crystal dendrite of the lead crystal from penetrating through the porous separator and causing shortage.

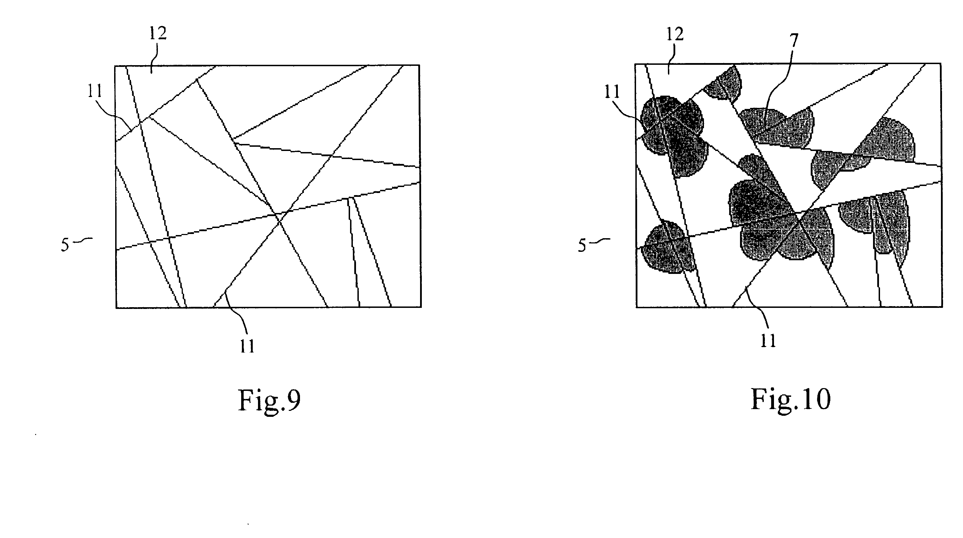

Fig. 9 shows a structural diagram of the conventional porous separator 5, wherein the fibers 11 are to interlace with each other and produce a plurality of pores 12. What Fig. 10 shows is that the polymer 7 shall gather at the junctions in the fibers 11 structure, and makes the junctions between fibers 11 stronger through condensation among the molecules of the polymer 7, thus tremendously increasing the mechanical strength of the separator 4'.

The porous separator 4' manufactured through the method of the invention has another merit of decreasing the possibility of the lead crystal dendrite (referring to No. 13 in Fig. 2) penetrating from the negative plate into the positive plate, thus causing shortage.

The mechanical strength enhanced varies in accordance with different quantities, kinds and the lengths of drying time of the polymers.

The merits of the battery separator 4' combining the polymer 7 with the fibers 11 manufactured through the method of the invention are to be further understood through the embodiments as follows:

### Embodiment 1: Testing for the mechanical strength of the separator

In this embodiment, the method of spraying, immersing, brushing or means similar of the invention to produce battery separators combining polymers with glass fiber is used, and the differences regarding the mechanical strength between separators produced through means of the invention and the conventional glass fiber separators are to be measured through testing.

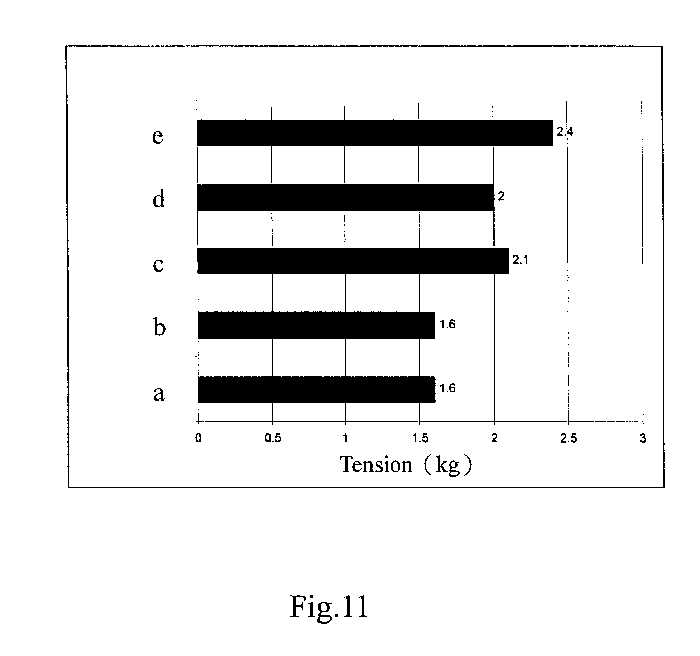

The embodiment tests five battery separators (a∼e) having the same size (length: 15cm, width: 4.5 cm, thickness: 2.1 mm), comprising: two glass fiber separators (a and b) without being coated with polymers, and three other separators c, d and e with one of the surfaces coated with polymers, but having different drying time of the polymers as 10 minutes (c), 15 minutes (d) and 20 minutes (e) respectively, and then test the amount of tension the five separators can bear, with the final results being shown in Fig. 11. Fig. 11 shows that, for both glass fiber separators a and b not produced through means of the invention, the amount of tension bearable is 1.6 Kg, whereas the amounts of tension bearable for the other three glass fiber separators c, d and e coated with polymers having different drying times of 10 minutes (c), 15 minutes (d) and 20 minutes (e) are 2.1 Kg, 2.0 Kg and 2.4 Kg respectively.

Through the test result above, it is obvious that, in the invention, to combine the traditional glass fiber separator with polymers can enhance the mechanical strength of the battery separators by 25% to 50%; in addition, only one surface of each glass fiber separator tested is coated with polymers, thus more mechanical strength of the battery separator can be achieved if all the surfaces of each glass fiber separator tested are coated with polymers.

### Embodiment 2: Testing for the performance of the separator

Through the test result of the embodiment 1 above, the glass fiber separator having polymers coated manufactured via method of the invention has more mechanical strength, therefore two lead-acid batteries (A and B) with identical sizes are to be compared in this embodiment, wherein the separator in battery A is a thicker glass fiber separator commonly used, whereas the separator in battery B is that manufactured via the method of the invention. Thus separator used in battery B has higher mechanical property; thinner separator could be used and more positive and negative electrode plates (compare to battery A) were installed inside battery B.

The means for testing the efficiency of the two batteries is to conduct high rate discharge with certain current (e.g., 36 amperes), and at the same time observe the variations of the voltage of the batteries. Basically, during the process of continuous high rate discharge, the voltage of batteries lowers by degree, and the goal of the embodiment is to test the period of time for the lowering voltages of batteries to reach cut-off value (e.g., 5.25V); the longer it takes, the better the performance of the battery is.

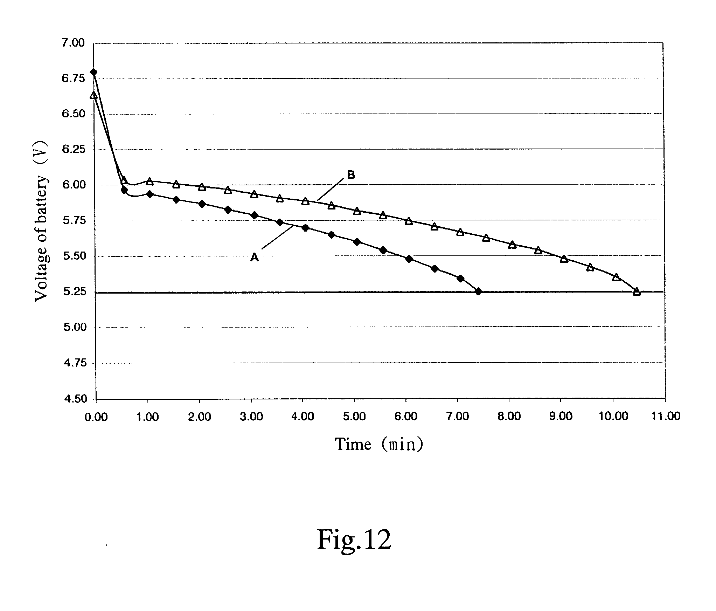

As shown in Fig. 12, it takes both batteries A and B 7.42 minutes and 10.46 minutes respectively to lower the voltage to 5.25 V under constant current discharge with 36 amperes. Because the standard discharge time for common battery A (industrial products) is about 7.5 to 8.5 minutes, it is evident that the performance of battery B is 20% higher than that of battery A.

It can be concluded from the embodiments above that, the battery separator of the invention can decrease the thickness of the separator, thus saving space occupied in the interior of batteries, increasing the numbers of the positive and negative plates, and raising the capacity of the battery.

Although the present invention has been described in considerable detail with reference to certain preferred embodiments thereof, those skilled in the art can easily understand that all kinds of alterations and changes can be made within the spirit and scope of the appended claims. Therefore, the spirit and scope of the appended claims should not be limited to the description of the preferred embodiments contained herein.

## Claims

1. A battery separator, comprising:
fiber material; and
polymers;
said polymers are to combine with said fiber material, so as to increase the mechanical strength of said battery separator.

2. A battery separator as in claim 1, wherein said fiber material can be glass fiber, chemically synthetic fiber or combination of glass fiber and chemically synthetic fiber.

3. A battery separator as in claim 2, wherein said chemically synthetic fiber can be polyester or other chemically synthetic fibers with acid-resistance capability.

4. A battery separator as in claim 1, wherein the main characteristics of said polymers include acid-resistance capability, ability to form porous polymer layer, and enough bonding strength so as to bind said fiber material.

5. A battery separator as in claim 1, wherein said polymers can be phenol polymer, epoxy resin polymer or other polymers with similar characteristics.

6. A battery separator as in claim 1, wherein said polymers can be added with water-absorbing additives so as to maintain the porosity of polymers and to absorb liquids.

7. A battery separator as in claim 6, wherein said water-absorbing additives are silicon dioxide or other compounds with similar characteristics.

8. A battery separator as in claim 1, wherein said battery separator is used in lead-acid batteries.

9. A battery separator as in claim 4, wherein said acid is sulfuric acid or other kinds of acid with similar chemical characteristics.

10. A battery separator as in claim 4, wherein said acid is used for being the electrolyte in lead-acid batteries.

11. A battery separator as in claim 8, wherein said lead-acid batteries comprise at least one positive electrode, one negative electrode, one separator and electrolyte.

12. A battery separator as in claim 1, wherein the main purposes of said separator are to absorb said electrolyte, to be the medium of electrolyte transfer, and to be the insulator between the positive and negative electrodes.

13. A manufacturing method for battery separator, comprising steps as follows:
providing with porous separator;
placing polymers in said porous separator;
drying polymers; and
manufacturing battery separators by combining fiber material and polymers.

14. A manufacturing method for battery separator as in claim 13, wherein said polymers are to coat, attach or impregnate to the porous separator through spraying, immersing, brushing, adhering or other similar means.

15. A manufacturing method for battery separator as in claim 14, wherein the porous polymer layer can be formed on the surface of the porous separator through said means of spraying and brushing.

16. A manufacturing method for battery separator as in claim 14, wherein said means of immersion refers to the immersion of the porous separator in solution containing polymers, thus enabling the molecules of polymers to gather at the junction of fiber material.

17. A manufacturing method for battery separator as in claim 14, wherein said means of adhering refers to the direct contact of the polymer membrane onto the surface of the porous separator.

18. A manufacturing method for battery separator as in claim 16, wherein said polymer solution includes polymers, hardener and solvent.

19. A manufacturing method for battery separator as in claim 18, wherein said solvent is isopropyl alcohol, acetone or other similar solvents.

20. A manufacturing method for battery separator as in claim 13, wherein the condensation among molecules of polymers further consolidates the junctions among fibers, thus tremendously increasing the mechanical strength of separators.

21. A manufacturing method for battery separator as in claim 20, wherein said mechanical strength varies according to the type, quantity and drying time of polymers.

22. A manufacturing method for battery separator as in claim 13, wherein said fiber can be glass fiber, chemically synthetic fiber or combination of glass fiber and chemically synthetic fiber.

23. A manufacturing method for battery separator as in claim 22, wherein said chemically synthetic fiber can be polyester or other chemically synthetic fibers with acid-resistance capability.

24. A manufacturing method for battery separator as in claim 13, wherein said polymers can be phenol polymer, epoxy resin polymer or other polymers with similar characteristics.

25. A lead acid battery comprising a battery separator in accordance with any of claims 1 to 12.
